Europäisches Patentamt

European Patent Office

Office européen des brevets

(19)

(11) EP 0 914 004 A1

(12) EUROPEAN PATENT APPLICATION

(43) Date of publication:
06.05.1999 Bulletin 1999/18

(51) Int. Cl.⁶: H04N 7/26

(21) Application number: 97118846.1

(22) Date of filing: 29.10.1997

(84) Designated Contracting States:
AT BE CH DE DK ES FI FR GB GR IE IT LI LU MC NL PT SE
Designated Extension States:
AL LT LV RO SI

(71) Applicant: Ntec Media GmbH
14482 Potsdam-Babelsberg (DE)

(72) Inventors:
• Wu, Xiaolin
London, Ontario N5X 3T9 (CA)
• Barthel, Kai Uwe
10785 Berlin (DE)

(74) Representative:
Tetzner, Michael et al
Anwaltskanzlei Dr. Tetzner
Van-Gogh-Strasse 3
81479 München (DE)

(54) **Coding system and method for lossless and lossy compression of still and motion images**

(57)    The invention relates to a coding system for lossless and lossy compression of still and motion images with means of statistical context modeling for adaptive entropy coding of wavelet coefficients in different conditioning templates. Furthermore, it is directed to a method for lossless and lossy compression of still and motion image data by hierarchical decomposing of said image data into subbands by a revertible wavelet transform that generates wavelet coefficients and by using a conditioning template for statistical context modeling and adaptive entropy coding of said wavelet coefficients. The compression ratio is improved by one or more of the following steps:

- adapting the shape and/or orientation of said conditioning template to different subbands;
- converting a two-dimensional array of signed wavelet coefficients into an equivalent sequence of only two input symbols for adaptive binary entropy coding;
- using previously scanned bit planes in forming conditioning templates;
- reducing the number of possible conditioning states corresponding to all possible combinations of events in the conditioning templates by using least-squares estimates of magnitudes of wavelet coefficients;
- reducing the number of possible conditioning states corresponding to all possible combinations of events in the conditioning templates by first using least-squares estimates of magnitudes of wavelet conditions: and then by minimum-entropy quantization of said estimates:

- comparing the so-far-coded bits of the coefficient $c$ being presently coded with the so-far-coded bits of the neighbouring coefficients and parent coefficient of $c$ to characterise spacial texture patterns and using them to augment the conditioning states created by the quantization of said estimates;

- conditioning the sign of a wavelet coefficient $c$ on the signs of neighbouring coefficients of $c$.
- recording for each subband the location of the most significant bit of the coefficient of maximum magnitude in the subband and including it as side information in the code stream.

## Description

The invention relates to a coding system for lossless and lossy compression of still and motion images with means of statistical context modeling for adaptive entropy coding of wavelet coefficients in different conditioning templates. Furthermore it is directed to a method for lossless and lossy compression of still and motion image data by hierarchical decomposing of said image data into subbands by a revertible wavelet transform that generates wavelet coefficients and by using a conditioning template for statistical context modeling and adaptive entropy coding of said wavelet coefficients.

Such an image compression method can be used for archiving movies, medical imagery; satellite imagery, SAR imagery, precious visual arts and documents and the like. There are high demands for lossless image compression systems in scientific, medical, movie and visual arts communities. Lossless image compression means that a compressed image can be decoded to its original form without altering a single bit of data. Furthermore, it is desirable to have a progressive transmission capability by organizing the bit stream of the coder in such a way that any first portion of the bit stream can be decoded to an approximation of the input image. The more bits are decoded, the better is the approximation. When the entire bit stream is decoded, the original image is exactly reconstructed. This approach is known to be embedded coding of wavelet coefficients in the literature. The two most popular embedded coding schemes are Shapiro's zero-tree technique, J.M.Shapiro, "Embedded image coding using zerotrees of wavelet coefficients", IEEE Trans. on Signal Proc.,41(12):3445-3462,1993,called ERZ and Said-Pearlman's SPIHT-technique, A. Said and W. A. Pearlman, "A new fast and efficient image codec based on set partitioning in hierarchical trees", IEEE Trans. on Circuits and Systems for Video Tech., 6(3):243 250, June 1996.

X. Wu, "Efficient and effective lossless compression of continuous-tone images via context selection and quantization", IEEE Trans. on Image Proc.,6(5):656-664, 1996 disclosed an image compression method using the DPCM technique which is superior in lossless compression to all wavelet image compression methods known so far. However, this compression method does not have a progressive transmission capability.

It is an objective of this invention to develop a coding system and a method for lossless and lossy compression of still and motion images having a progressive transmission capability and an improved compression ratio.

This objective is obtained by the features of claims 1, 9 to 16.

Further embodiments of the invention are the subject matter of the subclaims.

The invention does not impose a largely artificial structure of zero-tree or the alike on the wave/et coefficients. Quad-tree type of data structures is too rigid, because only templates of square shape in the spatial domain can be used, whereas statistically dependent wavelet coefficients may form regions of arbitrary shapes. Therefore, the inventions suggests means of adapting shapes and/or orientations of conditioning templates to different subbands.

According to a second aspect of the invention the two-dimensional array of signed wavelet coefficients is converted into an equivalent sequence of only two input symbols for adaptive binary entropy coding.

A third aspect of the invention relates to the usage of previously coded bit planes in forming conditioning templates.

A fourth aspect of the invention is to include in the code stream the bit location of the most significant bit of the wave/et coefficient of the largest magnitude in each subband as side information.

A fifth aspect of the invention is characterised by reducing the number of possible conditioning states corresponding to all possible combinations of events in the conditioning templates using least-squares estimates of magnitudes of wavelet coefficients.

According to another aspect of the invention, the number of the possible conditioning states is further reduced by minimum-entropy quantization of said estimates.

Finally, the invention is characterised by conditioning the sign of a wavelet coefficient $c$ on the signs of neighbouring coefficients of $c$.

Preferably, the coding system and the method respectively is characterised by a combination of all aspects mentioned above.

The invention will now be described in greater detail, by way of example, with reference to the drawings, in which:

Figure 1 schematically discloses the wavelet transform of an image into subbands.
Figure 2 discloses the scanning order of a bit plane.
Figure 3 discloses the locational notations of bits used to estimate the conditional probability.
Figure 4 discloses different conditioning templates in the different subbands.

The invention relates to a multi-resolution, revertible wavelet-based subband coding system for lossless and lossy compression of still and motion images. It comprises an encoder and a symmetrical decoder.

In order to achieve lossless reconstruction at the final stage, invertible, integer-to-integer wavelets have to be used. There is a family of such wavelets that were published in A.R. Calderbank, I. Daubechies, W. Sweldens and B.L. Yeo, "Wavelet transforms that map integers to integers", Tech. Rep., Dept. of Math, Princeton Univ., Sep. 96, in Journal of Applied and Computational Harmonic Analysis.

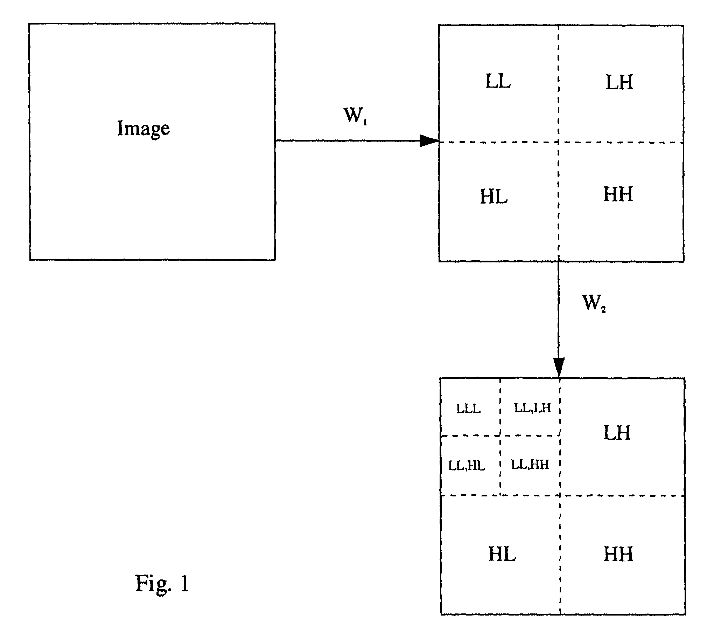

To compress an image the encoder does a forward integer wavelet transform $W_1$ on the image, and decomposes it into LL, LH, HL, and HH subbands. Then the LL band may be decomposed further by a forward integer wave/et transform $W_2$ which may be the same or different from $W_1$, resulting (LLL), (LL,LH), (LL,HL), and (LL,HH) subbands of larger scale or lower resolution, and so on, as depicted by Fig.1 Decompression by the decoder is a reverse process via a series of inverse integer wavelet transforms $W_k^{-1}, \cdots, W_2^{-1}, W_1^{-1}$. The wavelet transforms do not lead to any data reduction. The compression performance of a wavelet image coder largely depends on how well the wavelet coefficients can be compressed. This is the central issue addressed by this invention.

The method according to the invention allows a lossless decompression because all wavelet coefficients are integers, and are not quantized as in real-valued wavelet transforms. Thus there is no loss of data due to quantization distortion. But the bit stream of the coder is organized in such a way that any first portion of the bit stream can be decoded to an approximation of the input image. The more are the bits decoded, the better are the approximation. When the entire bit stream is decoded, the original image is exactly reconstructed.

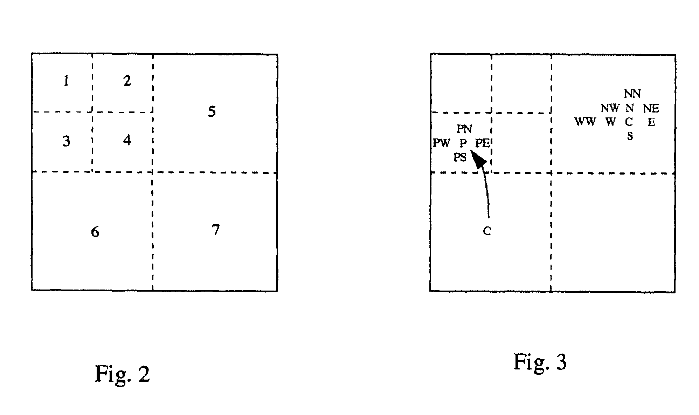

Wavelet coefficients are arranged in bit planes and the system according to the invention codes the wavelet coefficients bit plane by bit plane, scanning from the most to the least significant bits. Within each bit plane, the wavelet coefficients are scanned in the octave order, from the lowest subband to the highest subband, or from the largest scale to the smallest scale. In the same scale the method sequentially codes LH, HL, and HH subbands. The scanning order is indicated in Fig.2.

The bit plane coding deals with only two source symbols: 0 or 1. When the most significant bit of a wavelet coefficient is scanned, the sign of the coefficient has to be coded. Since sign is also a binary event, the coder again needs to code only two source symbols in this slightly complex situation. Thus all integer wavelet coefficients can be converted into a sequence of binary symbols: $x_1, x_2, \cdots, x_n, x_i \in \{0, 1\}$. The minimum codelength of the binary sequence in bits is given by

$$-\log_2 \prod_{i=1}^{n} P(x_i | x^{i-1}), \tag{1}$$

where $x^{i-1}$ denotes the sequence $x_{i-1}, x_{i-2}, \cdots, x_1$. This determines the minimum lossless rate given the integer wavelet transform. In practice, arithmetic coding can approach this minimum rate. Under the assumption that the random process producing $x^n$ is Markovian, the key and also difficult issue in compressing $x^n$ is the estimation of $P(x_i | \underline{x}^{i-1})$, where $\underline{x}^{i-1}$ denotes a subsequence of $x^{i-1}$. Note that the most relevant past subsequence $\underline{x}^{i-1}$ is not necessarily a prefix of $x^{i-1}$. In image coding, $\underline{x}^{i-1}$ or a causal template for $x_i$ consists of adjacent symbols in both time and frequency. An estimate of the conditional probability mass function $\hat{P}(x_i | \underline{x}^{i-1})$ serves as a statistical model of the source. The set of past observations $\underline{x}^{i-1}$ on which the probability of the current symbol is conditioned is called modeling context. It is the model that determines the bit rates or compression ratios of any compression algorithms. In case of wavelet-based image compression, insight into intrinsic properties of wavelet coefficients and algorithmic ingenuity are required to form conditioning templates that reveal statistically significant structures between the source symbols in a small number of conditioning states or model parameters.

We take a universal source coding approach to compress the binary sequence $x^n$, assuming no preknowledge about $P(x_i | x^{i-1})$. The central task is to estimate the conditional probability $P(x_i | \underline{x}^{i-1})$ on the fly based on the past coded bits, and use the estimate $\hat{P}(x_i | \underline{x}^{i-1})$ to drive an adaptive binary arithmetic coder. For easy referring of individual $x_i$ in the binary sequence $x^n$ as the sign and magnitude bits of specific wavelet coefficients, we denote the $b$-th bit of a coefficient $C$ by $C_b$, the $i$-th through $j$-th bits of $C$, $j > i$, by $C_{j..i}$, and the sign of $C$ by

$$\text{(S)}C.$$

In the sequeal, the notation $C_{j..i}$ always refers to the bits in the binary encoding of $|C|$, excluding the sign bit. If the most significant bit of $C$ is lower than $b$, then $C_{m..b}$ is considered to be 0. We use directional notations N, W, S, E, NW, NE, NN, WW, and so on, to denote the coefficients to the north, west, south, east, north-west, north-east, north-north, and west-west of the current coefficient $C$. Similarly, we denote the parent coefficient by P, and those coefficients in the parent subband to the north, west, south, and east of P by PN, PW, PS, and PE. The meanings of those locational notations are illustrated in Fig. 3.

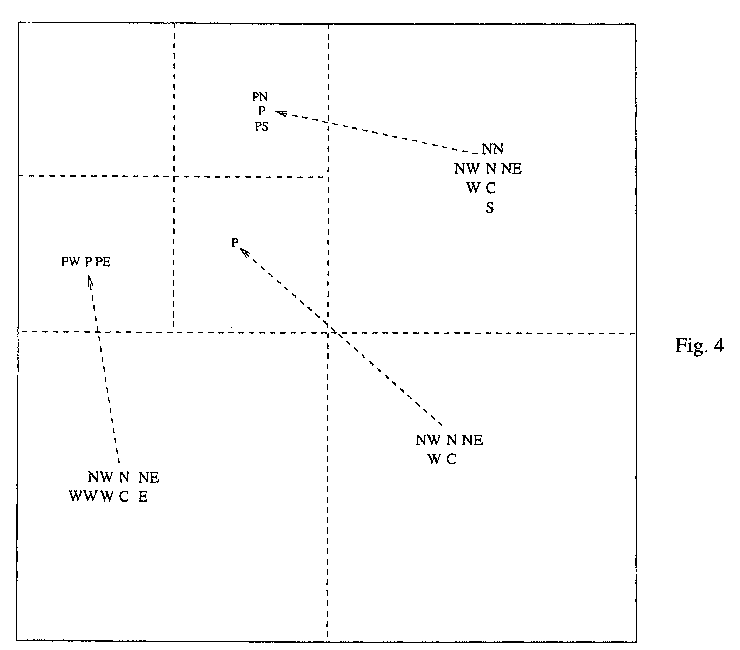

The subbands LH, HL and HH have different orientations. For instance, the LH subband exhibits predominantly vertical structures, while the HL subband exhibits predominantly horizontal structures. In HH subbands there is a lack of directional structures. To increase the probability of the current symbol and thereby improve the bit rates or compression ratio, the orientations of different subbands can be used advantageously by adapting the shape and/or orientation of the conditioning templates to different subbands. Fig. 4 discloses an example of different conditioning templates in the different subbands LH, HL and HH.

Accordingly, the set of events in the LH subband forms a vertically prolonged conditioning template. In the HL subband a horizontally prolonged conditioning template is used.

There is another possibility of improving the estimate of the conditional probability of current symbol by using previously scanned bit planes in forming conditioning templates.

Wavelet transforms localize signal energy in both frequency and spatial domains. Namely, wavelet coefficients of similar magnitudes statistically cluster in frequency subbands and in spatial locations. Large wavelet coefficients in different frequency subbands tend to register at the same spatial locations. Guided by those observations, a coefficient is modeled by its neighbors in the same subband, and by the spatially corresponding coefficients in the parent subband. Suppose that the most significant bit of the largest wavelet coefficient in magnitude is in the $m$-th bit plane, and the system is currently coding the $b$-th bit plane. Then the system conditions $C_b$, the $b$-th bit of the current coefficient $C$, on

$$C_{m..b+1}, N_{m..b}, W_{m..b}, S_{m..b+1}, E_{m..b+1} \qquad (2)$$
$$NW_{m..b}, NE_{m..b}, NN_{m..b}, WW_{m..b},$$
$$P_{m..b}, PN_{m..b}, PS_{m..b}, PW_{m..b}, PE_{m..b}.$$

For maximum compression, all the known bits of the neighboring coefficients in current and parent subbands, up to the moment of coding $C_b$, are treated as potential modeling events. The conditioning template of $C_b$ according to the present invention contains some future information if one considers that the octave-raster scanning of coefficients produces a time series. Specifically this refers to the use of $S_{m..b+1}$, $E_{m..b+1}$, $PS_{m..b}$, $PE_{m..b}$, and the alike in context modeling of $C_b$. The ability of looking into the future in a time series generally reduces the uncertainty of $C_b$.

By using the conditioning template of (2) we have in fact proposed a statistical model

$$P\big(C_b|N_{m..b}, W_{m..b}, S_{m..b+1}, E_{m..b+1}, NW_{m..b}, NE_{m..b}, P_{m..b} \cdots\big) \qquad (3)$$

of very high order. Consequently we face the problem of high model cost or context dilution, i.e., lack of sufficient samples to reach a robust probability estimate

$$\hat{P}\big(C_b|N_{m..b}, W_{m..b}, S_{m..b+1}, E_{m..b+1}, NW_{m..b}, NE_{m..b}, P_{m..b} \cdots\big). \qquad (4)$$

By now one may appreciate the advantage of turning the wavelet coefficients into a binary sequence, because a conditional binary probability has only two parameters. But even with $C_b$, being binary, we still have to reduce the high-order modeling context of (2) to a modest number of conditioning states.

By combining the idea of adapting the shape and/or orientation of that conditioning template to different subbands with the idea of using previously scanned bit planes we use the following sets of events in the different subbands LH, HL and HH to form improved condition templates:

$$S_{LH} = \big\{N_{m..b}, W_{m..b}, NW_{m..b}, NE_{m..b}, NN_{m..b}, S_{m..b+1}, P_{m..b}, PN_{m..b}, PS_{m..b}\big\} \qquad (5)$$

$$S_{HL} = \big\{N_{m..b}, W_{m..b}, NW_{m..b}, NE_{m..b}, WW_{m..b}, E_{m..b+1}, P_{m..b}, PW_{m..b}, PE_{m..b}\big\} \qquad (6)$$

$$S_{HH} = \big\{N_{m..b}, W_{m..b}, NW_{m..b}, NE_{m..b}, S_{m..b+1} E_{m..b+1}, P_{m..b}, C_{HL}, C_{LH}\big\} \qquad (7)$$

In equation (7) $C$ and $C$ are two sister coefficients of $C$ that are at the same spatial location in the HL and LH subbands of the same scale.

After adaptive conditioning template selection based on subband orientations and the usage of informations of previously scanned bit planes, we have to reduce the number of possible conditioning states corresponding to all possible combinations of events in the conditioning templates by using least-squares estimates of magnitudes of wavelet coefficients.

To capture the correlation between $c$ and its neighbors in spatial-frequency domain, we use a linear estimator $\Delta$ of the magnitude of $c$, one for each of three orientations (LH, HL, and HH) of subbands,

$$\Delta_\theta = \sum_{z_i \in S_\theta} \alpha_{\theta,i} z_i, \quad \theta \in \{LH, HL, HH\}, \tag{8}$$

where terms $z_i$ are conditioning events in the conditioning template chosen for the given subband of $c$ as described above The parameters $\alpha_{\theta,i}$ are determined by linear regression so that $\Delta_\theta$ is the least-squares estimate of $c$ in the given subband orientation. The linear regression can be done off-line for a general set of training images, a given class of images, and even for a given image. Of course, in the last case, the optimized parameters have to be sent as side information.

After the least-squares estimation the number of possible conditioning states shall be further reduced by minimum-entropy quantization of said estimates.

For each of $\Delta_\theta$ we can design an optimal quantizer $Q$ to minimize the conditional entropy $H(c|(Q_\theta(\Delta_\theta))$. Since $\Delta_\theta$ is a scalar random variable the minimum-entropy quantizer $Q_\theta$ can be designed via standard dynamic programming process. The minimum-entropy quantizers are computed off line using a training set, and the quantizer parameters are stored and available at both encoder and decoder.

A further improvement can be achieved by comparing the so-far-coded bits of the coefficient $c$ being presently coded with so-far-coded bits of the neighbouring coefficients and parent coefficient of $c$ to characterise spatial texture patterns and using them to augment the conditioning states created by the quantization of these estimates. We observed that a wavelet coefficient $c$ has high correlation not only with the energy levels but also with spatial structures of its neighboring coefficients in spatial-frequency domain. Spatial texture patterns of wavelet coefficients are formed and used in context modeling. Specifically, a bit pattern $T = t_4 t_3 t_2 t_1 t_0$ is set by

$$
\begin{aligned}
t_0 &= \mathrm{N}_{m..b} > \mathrm{C}_{m..b+1}?0:1; \\
t_1 &= \mathrm{W}_{m..b} > \mathrm{C}_{m..b+1}?0:1; \\
t_2 &= \mathrm{S}_{m..b+1} > \mathrm{C}_{m..b+1}?0:1; \\
t_3 &= \mathrm{E}_{m..b+1} > \mathrm{C}_{m..b+1}?0:1; \\
t_4 &= \left\{
\begin{array}{ll}
\mathrm{P}_{m..b} + \mathrm{PN}_{m..b} + \mathrm{PS}_{m..b} > 6\mathrm{C}_{m..b+1}?0:1, & \text{in LH subbands;} \\
\mathrm{P}_{m..b} + \mathrm{PW}_{m..b} + \mathrm{PE}_{m..b} > 6\mathrm{C}_{m..b+1}?0:1, & \text{in HL subbands.}
\end{array}
\right.
\end{aligned}
\tag{9}
$$

Finally, quantized energy level $Q_\theta(\Delta_\theta)$ and the spatial texture pattern $T$ of $c$'s neighboring coefficients are combined to form conditioning states in entropy coding of $c$. Namely it codes $c$ by driving an adaptive binary arithmetic coder with a probability estimate

$$\hat{P}(c_b | Q_\theta(\Delta_\theta), T). \tag{10}$$

For each subband the location of the most significant bit of the coefficient of maximum magnitude in the subband is recorded, and is included as side information in the code stream. This side information allows escaping of an entire subband in bit plane coding when a subband has no coefficients of significant bits above the current bit plane.

After a wavelet transform, the waveform structures of the input image are often reflected by sign patterns of wavelet coefficients. This means that the signs of wavelet coefficients are compressible even though the wavelet coefficients in the high frequency subbands appear to form zero-mean process. During embedded bit plane coding the method according to this invention considers the sign of a wavelet coefficient to have three states: +, -, and 0. With respect to the $b$-th bit plane, the sign of $c$ is still unknown to the decoder if the most significant bit of $c$ is below $b$. In this case state 0 is assigned to

$$\text{Ⓢ}c_{m..b},$$

otherwise + or - is assigned to

$$\text{Ⓢ}c_{m..b}$$

by the conventional meanings of sign. Here the state 0 is a dynamic concept, it may change to + or - as the coding process advances to deeper bit planes. We distinguish 0 from + and - because such distinction yields a more revealing modeling context for the signs.

When the most significant bit of $c$ is scanned, the sign of $c$ is coded by binary arithmetic coding based on an on-line estimated probability

$$\hat{P}(\text{Ⓢ}c \,|\, \text{Ⓢ}_N, \text{Ⓢ}_N, \text{Ⓢ}_{NW}, \text{Ⓢ}_{NE}, \text{Ⓢ}_{NN}, \text{Ⓢ}_S), \quad c \in \text{LH subbands} \qquad (11)$$
$$\hat{P}(\text{Ⓢ}c \,|\, \text{Ⓢ}_N, \text{Ⓢ}_N, \text{Ⓢ}_{NW}, \text{Ⓢ}_{NE}, \text{Ⓢ}_{WW}, \text{Ⓢ}_E), \quad c \in \text{HL subbands}$$
$$\hat{P}(\text{Ⓢ}c \,|\, \text{Ⓢ}_N, \text{Ⓢ}_N, \text{Ⓢ}_{NW}, \text{Ⓢ}_{NE}, \text{Ⓢ}c_{LH}, \text{Ⓢ}c_{HL}), \quad c \in \text{HH subbands}$$

The image compression system of this invention, when all the techniques described above are combined, can achieve a lossless bit rate of 3.91 bits/pixel on an ISO set of test images.

## Claims

1. A multi-resolution revertible wavelet-based subband coding system for lossless and lossy compression of still and motion images with means of statistical context modeling for adaptive entropy coding of wavelet coefficients in different conditioning templates,
   characterised by means of adapting shapes and/or orientations of said conditioning templates to different subbands.

2. Coding system according to claim 1, characterised by means of converting a two-dimensional array of signed wavelet coefficients into an equivalent sequence of only two input symbols for adaptive binary entropy coding.

3. Coding system according to claim 1, characterised by means of arranging the wavelet coefficients in bit planes and means of compressing said wavelet coefficients by scanning them from the most significant bit plane to the least significant bit plane and means of using previously scanned bit planes in forming conditioning templates for adaptive entropy coding of wavelet coefficients.

4. Coding system according to claim 1, characterised by means of reducing the number of possible conditioning states corresponding to all possible combinations of events in the conditioning templates by using least-squares estimates of the magnitudes of wavelet coefficients.

5. Coding system according to claim 4, characterised by means of further reducing the number of possible conditioning states by minimum-entropy quantization of said estimates.

6. Coding system according to claim 1, characterised by means of comparing the so-far-coded bits of the coefficient $c$ being presently coded with the so-far-coded bits of the neighbouring coefficients and parent coefficient of $c$ to form spatial texture patterns of wavelet coefficients.

7. Coding system according to claim 1 characterised by means of conditioning the sign of a wavelet coefficient $c$ on the signs of the neighbouring coefficients of $c$.

8. Coding system according to claim 1 characterised by an encoder and a symmetrical decoder.

9. A method for lossless and lossy compression of still and motion image data by

- hierarchical decomposing of said image data into subbands by a revertible wavelet transform that generates wavelet coefficients,
- using a conditioning template for statistical context modeling and adaptive entropy coding of said wavelet coefficients,
characterised by adapting the shape and/or orientation of said conditioning template to different subbands.

10. A method for lossless and lossy compression of still and motion image data by

- hierarchical decomposing of said image data into subbands by a revertible wavelet transform that generates signed wavelet coefficients,
- using a conditioning template for statistical context modeling and adaptive entropy coding of said wavelet coefficients,
characterised by converting a two-dimensional array of signed wavelet coefficients into an equivalent sequence of only two input symbols for adaptive binary entropy coding.

11. A method for lossless and lossy compression of still and motion image data by

- hierarchical decomposing of said image data into subbands by a revertible wavelet transform that generates wavelet coefficients,
- arranging the wavelet coefficients in bit planes and
- using a conditioning template for statistical context modeling and adaptive entropy coding of said wavelet coefficients,
- compressing said wavelet coefficients by scanning them from the most significant bit plane to the least significant bit plane
characterised by using previously scanned bit planes in forming conditioning templates.

12. A method for lossless and lossy compression of still and motion image data by

- hierarchical decomposing of said image data into subbands by a revertible wavelet transform that generates wavelet coefficients,
- using a conditioning template for statistical context modeling and adaptive entropy coding of said wavelet coefficients,
characterised by reducing the number of possible conditioning states corresponding to all possible combinations of events in the conditioning templates by using least-squares estimates of magnitudes of wavelet coefficients.

13. A method for lossless and lossy compression of still and motion image data by

- hierarchical decomposing of said image data into subbands by a revertible wavelet transform that generates wavelet coefficients,
- using a conditioning template for statistical context modeling and adaptive entropy coding of said wavelet coefficients,
characterised by reducing the number of possible conditioning states corresponding to all possible combinations of events in the conditioning templates by first using least-squares estimates of magnitudes of wavelet conditions, and then by minimum-entropy quantization of said estimates.

14. Method according to claim 13, characterised by comparing the so-far-coded bits of the coefficient $c$ being presently coded with the so-far-coded bits of the neighbouring coefficients and parent coefficient of $c$ to characterise spatial texture patterns and using them to augment the conditioning states created by the quantization of said estimates.

15. A method for lossless and lossy compression of still and motion image data by

- hierarchical decomposing of said image data into subbands by a revertible wavelet transform that generates wavelet coefficients,

- using a conditioning template for statistical context modeling and adaptive entropy coding of said wavelet coefficients,
  characterised by conditioning the sign of a wavelet coefficient $c$ on the signs of neighbouring coefficients of $c$.

16. A method for lossless and lossy compression of still and motion image data by

    - hierarchical decomposing of said image data into subbands by a revertible wavelet transform that generates wavelet coefficients,
    - arranging the wavelet coefficients in bit planes and
    - using a conditioning template for statistical context modeling and adaptive entropy coding of said wavelet coefficients,
    - compressing said wavelet coefficients by scanning them from the most significant bit plane to the least significant bit plane
      characterised by including in the code stream the bit location of the most significant bit of the wavelet coefficient of the largest magnitude in each subband as side information.

17. A method for lossless and lossy compression of still and motion image data characterised by a combination of one or a plurality of claims 9 to 16.

Fig. 1

EP 0 914 004 A1

Fig. 2

Fig. 3

Fig. 4

NN
NW N NE
W C
S

PN
P
PS

NW N NE
W C

P

PW P PE

NW N NE
W W W C E

European Patent
Office

**EUROPEAN SEARCH REPORT**

Application Number

EP 97 11 8846

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 797 358 A (MATSUSHITA ELECTRIC IND CO LTD) | 1,8,9,17 | H04N7/26 |
| Y | * abstract * | 2-5,7 | |
| A | * claims 1,9 * | 6 | |
|   | * figure 5 * | | |
|   | --- | | |
| X | GB 2 303 030 A (RICOH KK) | 10,11, 15-17 | |
| Y | * abstract * | 2,3,7 | |
| A | * page 41, line 1 - page 44, line 13 * | 6,14 | |
|   | * page 45, line 14 - page 46, line 2 * | | |
|   | * page 48, line 8 - page 51, line 12 * | | |
|   | * page 57, line 12 - page 61, line 12 * | | |
|   | * page 70, line 22 - page 74, line 18 * | | |
|   | * page 94, line 17 - page 94, line 18 * | | |
|   | * figures 1,2,13-15 * | | |
|   | * figures 19,25,26,33 * | | |
|   | --- | | |
| X | CHRYSAFIS C; ORTEGA A: "EFFICIENT CONTEXT-BASED ENTROPY CODING FOR LOSSY WAVELET IMAGE COMPRESSION" DATA COMPRESSION CONFERENCE, 25 - 27 March 1997, SNOWBIRD, UTAH, USA, pages 241-250, XP002056277 | 12,13,17 | |
| Y | * abstract * | 4,5 | |
| A | * page 243, line 12 - page 246, line 8 * | 14 | |
|   | * figure 1 * | | |
|   | --- | | |
|   | -/-- | | |

TECHNICAL FIELDS
SEARCHED        (Int.Cl.6)

H04N

The present search report has been drawn up for all claims

| Place of search | Date of completion of the search | Examiner |
|---|---|---|
| THE HAGUE | 19 February 1998 | Hampson, F |

European Patent Office

# EUROPEAN SEARCH REPORT

Application Number

EP 97 11 8846

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | SCHWARTZ E L; ZANDI A; BOLIEK M: "IMPLEMENTATION OF COMPRESSION WITH REVERSIBLE EMBEDDED WAVELETS" PROCEEDINGS OF THE SPIE: APPLICATIONS OF DIGITAL IMAGE PROCESSING XVIII, vol. 2564, 12 - 14 July 1995, SAN DIEGO, CA, USA, pages 32-43, XP002056278 * page 36, line 5 - page 37, line 2 * * page 39, line 11 - line 41 * * figures 1,5 * | 10,11 | |
| X | XIONG Z; RAMCHANDRAN K; ORCHARD M T: "EFFICIENT ARITHMETIC CODING FOR WAVELET IMAGE COMPRESSION" PROCEEDINGS OF THE SPIE: VISUAL COMMUNICATIONS AND IMAGE PROCESSING, vol. 3024, 12 - 14 February 1997, SAN JOSE, CA, USA, pages 822-833, XP002056279 * page 823, line 12 - line 19 * * page 829, line 17 - page 831, line 1 * | 10,12 | |
| A | NGUYEN-PHI K; WEINRICHTER H: "DWT IMAGE COMPRESSION USING CONTEXTUAL BITPLANE CODING OF WAVELET COEFFICIENTS" INTERNATIONAL CONFERENCE ON ACOUSTICS, SPEECH AND SIGNAL PROCESSING, vol. 4, 21 - 24 April 1997, MUNICH, GERMANY, pages 2969-2973, XP002056280 * page 2969, right-hand column, line 27 - page 2970, right-hand column, line 25 * * figure 2 * | 1-17 | TECHNICAL FIELDS SEARCHED (Int.Cl.6) |

-/--

The present search report has been drawn up for all claims

| Place of search | Date of completion of the search | Examiner |
|---|---|---|
| THE HAGUE | 19 February 1998 | Hampson, F |

**European Patent Office**

**EUROPEAN SEARCH REPORT**

Application Number

EP 97 11 8846

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | BUCCIGROSSI R W; SIMONCELLI E P: "PROGRESSIVE WAVELET IMAGE CODING BASED ON A CONDITIONAL PROBABILITY MODEL" INTERNATIONAL CONFERENCE ON ACOUSTICS, SPEECH AND SIGNAL PROCESSING, vol. 4, 21 - 24 April 1997, MUNICH, GERMANY, pages 2957-2960, XP002056281 * section 2: Implementation of a progressive image coder * | 1-17 | |
| A | WU X; CHEN J: "CONTEXT MODELLING AND ENTROPY CODING OF WAVELET COEFFICIENTS FOR IMAGE COMPRESSION" INTERNATIONAL CONFERENCE ON ACOUSTICS, SPEECH AND SIGNAL PROCESSING, vol. 4, 21 - 24 April 1997, MUNICH, GERMANY, pages 3097-3100, XP002056282 | 1-17 | |
| A | TAUBMAN D ET AL: "MULTIRATE 3-D SUBBAND CODING OF VIDEO" IEEE TRANSACTIONS ON IMAGE PROCESSING, vol. 3, no. 5, 1 September 1994, pages 572-588, XP000476833 * page 581, left-hand column, line 14 - page 583, right-hand column, line 30 * | 1-17 | TECHNICAL FIELDS SEARCHED (Int.Cl.6) |

The present search report has been drawn up for all claims

| Place of search | Date of completion of the search | Examiner |
|---|---|---|
| THE HAGUE | 19 February 1998 | Hampson, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 97 11 8846

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-1998

| Patent document cited in search report | | Publication date | Patent family member(s) | | Publication date |
|---|---|---|---|---|---|
| EP 0797358 | A | 24-09-1997 | JP | 9261644 A | 03-10-1997 |
| GB 2303030 | A | 05-02-1997 | CN | 1145553 A | 19-03-1997 |
| | | | DE | 19626615 A | 09-01-1997 |
| | | | JP | 9027752 A | 28-01-1997 |